# EUROPEAN PATENT APPLICATION

(11) **EP 4 142 122 A1**
(43) Date of publication of application: **01.03.2023**
(21) Application number: 22192602.5
(22) Date of filing: 29.08.2022
(51) Int. Cl.: H02K 9/197, H02K 5/20, H02K 3/24

(54) **ELECTRIC MOTOR**

(30) Priority: 30.08.2021 JP 2021140478
(71) Applicant: Yamaha Hatsudoki Kabushiki Kaisha, Iwata-shi, Shizuoka 438-8501 (JP)
(72) Inventor: Ito, Jin, Iwata-shi, Shizuoka (JP)
(74) Representative: Grünecker Patent- und Rechtsanwälte PartG mbB

(57) **Abstract**

An electric motor (1) includes a stator (3) including a stator core (30) and a coil (31), a rotor (4), a first cylindrical wall (W1), and a metal housing (2). A slot (35) of the stator core (30) includes a coil housing (35a). The coil (31) includes a coil end (31b, 31c) that protrudes in an axial direction (X) from an axial end surface (30a, 30b) of the stator core (30). The first cylindrical wall (W1) is in contact with the axial end surface (30a, 30b) of the stator core (30). A second cylindrical wall (W2) of the housing (2) is inserted into the first cylindrical wall (W1). The housing (2) demarcates a coil end cooling channel (Q1, Q2) in which a cooling liquid to cool the coil end (31b, 31c) flows. The coil end cooling channel (Q1, Q2) is located radially outward (R2) from the first cylindrical wall (W1) and the second cylindrical wall (W2). An inner peripheral surface (7b) of a metal ring (7) included in the first cylindrical wall (W1) is fitted to an outer peripheral surface (21h) of the second cylindrical wall (W2).

## Description

The present invention relates to an electric motor.

The rotating machine described in JP 5772832 A includes a mechanism for cooling a coil end portion provided on a stator by dripping oil (a cooling medium) onto the coil end portion. The rotating machine includes a ring-shaped mold member that separates a first space in which a rotor is located from a second space in which the coil end portion is located. The mold member prevents the oil from entering an air gap, which is a gap between the rotor and stator.

An outer peripheral portion of the mold member contacts an inner periphery of a trunk member constituting a housing of the rotating machine. An inner peripheral portion of the mold member contacts a partition portion that protrudes from a side wall member constituting the housing. That is, the mold member serves as a contact seal.

There is a large difference in the thermal expansion coefficient between a plastic forming the mold member and an iron alloy, etc., forming the housing. Accordingly, the contact seal is degraded in function due to a difference in dimensional change with a change in temperature. Due to the functional degradation of the contact seal, if the oil enters the air gap, the mechanical loss of the rotating machine increases, and the rotating machine is degraded in efficiency.

It is the object of the present invention to provide an electric motor that is high in efficiency.

According to the present invention said object is solved by an electric motor having the features of independent claim 1.

Preferred embodiments are laid down in the dependent claims.

In order to overcome the previously unrecognized and unsolved challenges described above, a preferred embodiment provides an electric motor including a stator including a stator core and a coil, a rotor, a first cylindrical wall, and a metal housing to house the stator and the rotor. The stator core includes a yoke extending in an axial direction along a rotational axis and annularly surrounding the rotational axis, a plurality of teeth located on an inner periphery of the yoke spaced apart at intervals in a circumferential direction around the rotational axis, and a plurality of slots between adjacent teeth. Each of the plurality of slots includes a coil housing that houses the coil and a slot opening that opens the coil housing radially inward of the stator. The coil includes a coil end that protrudes in the axial direction from an axial end surface of the stator core. The rotor is spaced apart radially inward from the stator by an air gap and is rotatable around the rotational axis. The first cylindrical wall is concentric with the stator core. The first cylindrical wall includes at one end in the axial direction a contact portion that is in contact with the axial end surface of the stator core. The housing includes a second cylindrical wall inserted into the first cylindrical wall. The housing defines a coil end cooling channel in which a cooling liquid flows to cool the coil end. The coil end cooling channel is located radially outward from the first cylindrical wall and the second cylindrical wall. The first cylindrical wall includes a metal ring. The metal ring includes an inner peripheral surface fitted to an outer peripheral surface of the second cylindrical wall.

According to this structural arrangement, into the first cylindrical wall having at its one end in the axial direction the contact portion that is in contact with the axial end surface of the stator core, the second cylindrical wall of the metal housing is inserted. The inner peripheral surface of the metal ring included in the first cylindrical wall is fitted to the outer peripheral surface of the second cylindrical wall. Therefore, sufficient sealability occurs with a change in temperature between the first cylindrical wall and the second cylindrical wall. The cooling liquid is thus prevented from entering the air gap, and the increase in mechanical loss is prevented. As a result, the efficiency is increased.

In a preferred embodiment, the electric motor further includes a plastic portion integral with the stator core, and that holds the metal ring. According to this structural arrangement, secure holding of the metal ring is increased.

In a preferred embodiment, the plastic portion includes a first portion which covers the axial end surface of the stator core, and a second portion which covers at least a portion of an outer peripheral surface of the metal ring and defines a portion of the first cylindrical wall. According to this structural arrangement, secure holding of the metal ring is increased by covering at least a portion of the outer peripheral surface of the metal ring with the plastic portion that covers the axial end surface of the stator core.

In a preferred embodiment, the plastic portion includes a third portion which extends in the axial direction so as to block the slot opening. According to this structural arrangement, even when a cooling liquid enters the interior of the slot, the cooling liquid is prevented from entering the air gap through the slot opening. Therefore, the increase in mechanical loss is prevented, and the efficiency is increased.

In a preferred embodiment, a pair of metal rings and second portions are located on both sides of the stator core in the axial direction. The third portion couples the pair of second portions with each other. According to this structural arrangement, secure holding of the pair of metal rings located on both sides of the stator core in the axial direction is increased.

In a preferred embodiment, the metal ring includes a first end in the axial direction which opposes the axial end surface of the stator core in the axial direction. The first end of the metal ring is separated from the axial end surface of the stator core. According to this structural arrangement, contact between the stator core and the metal ring is avoided. Therefore, a loss that occurs in the metal ring is prevented and increases the efficiency.

In a preferred embodiment, the plastic portion includes an interposing portion which is interposed between the axial end surface of the stator core and the first end of the metal ring. The interposing portion defines a portion of the first cylindrical wall. The contact portion is provided in the interposing portion. According to this structural arrangement, contact between the stator core and the metal ring is avoided by the interposing portion of the plastic portion. Therefore, a loss that occurs in the metal ring is prevented and increases the efficiency.

In a preferred embodiment, the coil includes a plurality of segment coils. In terms of a protrusion height in the axial direction from the axial end surface of the stator core, a maximum protrusion height of the coil end is higher than a maximum protrusion height of the metal ring. According to this structural arrangement, the metal ring has no effect when the segment coil is assembled to the stator core.

In a preferred embodiment, in the coil end, the segment coil includes an inclined portion which is inclined with respect to the axial direction as viewed from radially inward. In terms of a protrusion height in the axial direction from the axial end surface of the stator core, a maximum protrusion height of the inclined portion is higher than the maximum protrusion height of the metal ring. According to this structural arrangement, the metal ring has no effect when the segment coil having the inclined portions is assembled to the stator core.

In a preferred embodiment, in the coil end, the segment coil includes a joint end which is connected to another segment coil. The joint end is located higher than the maximum protrusion height of the metal ring in terms of the protrusion height in the axial direction from the axial end surface of the stator core. According to this structural arrangement, the metal ring has no effect when the joint end of the segment coil is joined with another segment coil.

In a preferred embodiment, on the outer peripheral surface of the second cylindrical wall, a housing groove houses a seal that seals between the outer peripheral surface of the second cylindrical wall and the inner peripheral surface of the metal ring. According to this structural arrangement, sealing performance between the metal ring and the second cylindrical wall is improved.

In a preferred embodiment, the coil end cooling channel is filled with the cooling liquid. According to this structural arrangement, the cooling effect is high.

The above and other elements, features, steps, characteristics and advantages of the present teaching will become more apparent from the following detailed description of the preferred embodiments with reference to the attached drawings.

### BRIEF DESCRIPTION OF THE DRAWINGS

FIG. 1 is a front view of an electric motor according to a preferred embodiment.
FIG. 2 is a side view of the electric motor.
FIG. 3 is a longitudinal cross-sectional view of the electric motor, and corresponds to a cross-sectional view taken along A-O-C in FIG. 1.
FIG. 4 is a longitudinal cross-sectional view of the electric motor, and corresponds to a cross-sectional view taken along B-O-C in FIG. 1.
FIG. 5 is a longitudinal cross-sectional view of the electric motor, and corresponds to a cross-sectional view taken along D-D in FIG. 1.
FIG. 6 is an enlarged transverse cross-sectional view of the electric motor, and corresponds to a partially enlarged view of FIG. 5.
FIG. 7 is a transverse cross-sectional view of the electric motor, and corresponds to a cross-sectional view taken along E-E in FIG. 2.
FIG. 8 is a transverse cross-sectional view of the electric motor, and corresponds to a cross-sectional view taken along F-F in FIG. 2.
FIG. 9 is a transverse cross-sectional view of the electric motor, and corresponds to a view of FIG. 8 from which a coil is removed.
FIG. 10 is a transverse cross-sectional view of the electric motor, and corresponds to a cross-sectional view taken along G-G in FIG. 2.
FIG. 11 is a partially enlarged view of an axial end surface of a stator core.
FIG. 12 is a perspective view of a stator core assembly including the stator core, a plastic portion, and a metal ring.
FIG. 13 is a plan view of the stator core assembly.
FIG. 14 is a side view of the stator core assembly.
FIG. 15A is a longitudinal cross-sectional view of the stator core assembly, and corresponds to a cross-sectional view taken along H-H in FIG. 13.
FIG. 15B is an enlarged cross-sectional view of a main portion of the stator core assembly.
FIG. 16 is a transverse cross-sectional view of the stator core assembly, and corresponds to a cross-sectional view taken along I-I in FIG. 14.
FIG. 17 is a schematic view showing a disposition example of a segment coil.
FIG. 18A is a transverse cross-sectional view of a main portion of the stator core, showing a state in which an insulation paper is located in a slot before forming a plastic portion.
FIG. 18B is a transverse cross-sectional view of a main portion of the stator core assembly, and corresponds to a partially enlarged view of FIG. 16, showing a state in which the plastic portion is provided.

### DETAILED DESCRIPTION OF THE PREFERRED EMBODIMENTS

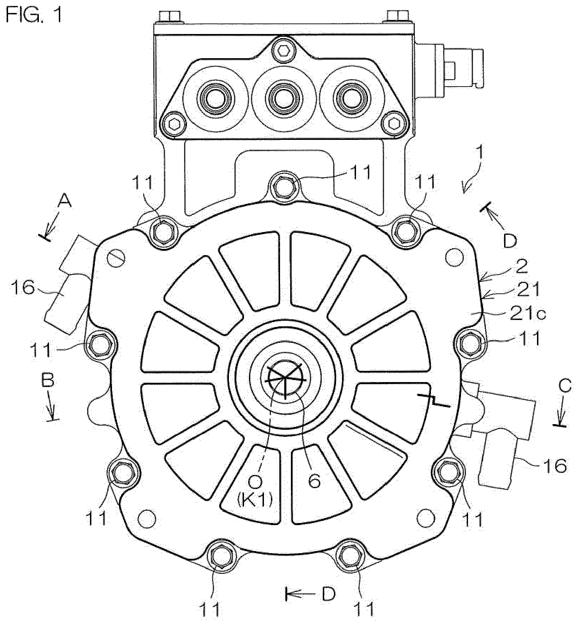

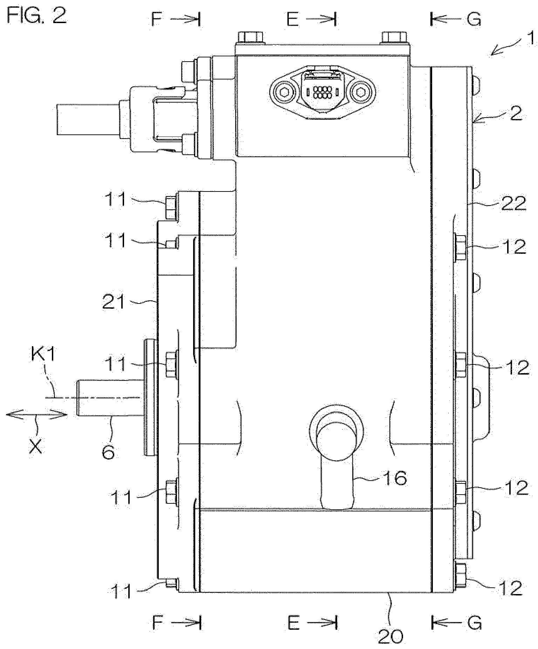

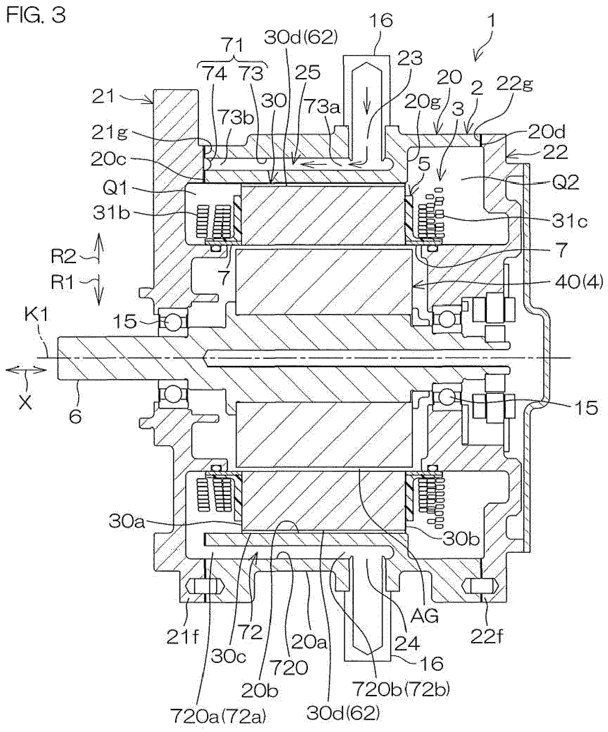

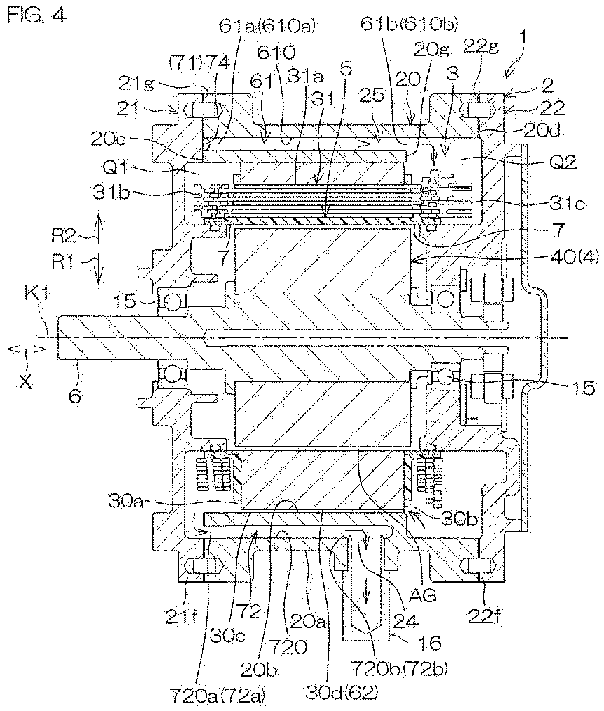

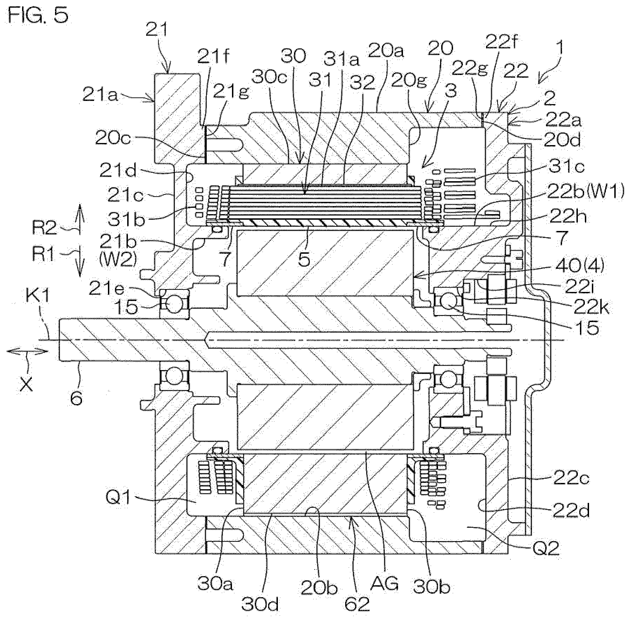

FIG. 1 is a front view of an electric motor 1 according to a preferred embodiment. FIG. 2 is a side view of the electric motor 1. FIG. 3 to FIG. 5 are longitudinal cross-sectional views of the electric motor 1. FIG. 3 corresponds to a cross-sectional view taken along A-O-C in FIG. 1. FIG. 4 corresponds to a cross-sectional view taken along B-O-C in FIG. 1. FIG. 5 corresponds to a cross-sectional view taken along D-D in FIG. 1.

As shown in FIG. 1 to FIG. 3, the electric motor 1 includes a housing 2, a stator 3, a rotor 4, a plastic portion 5, and an output shaft 6. As shown in FIG. 3, the housing 2 houses the stator 3 and the rotor 4. The output shaft 6 extends in an axial direction X along a rotational axis K1. The output shaft 6 is supported by the housing 2 so as to be rotatable around the rotational axis K1.

The rotor 4 rotates integrally with the output shaft 6. The rotor 4 is located radially inward R1 of the stator 3 through an air gap AG. The rotor 4 is rotatable around the rotational axis K1. The rotor 4 includes a rotor core 40 and permanent magnets (not shown) attached to the rotor core 40.

The stator 3 includes a stator core 30 and a coil 31. The coil 31 includes a first coil end 31b and a second coil end 31c as a pair of coil ends that protrude on both sides in the axial direction X of the stator core 30.

In the following, a direction that is perpendicular to the rotational axis K1 and is toward the rotational axis K1 is referred to as radially inward R1. On the other hand, a direction that is perpendicular to the rotational axis K1 and is away from the rotational axis K1 is referred to as radially outward R2.

First, description will be given of the housing 2.

The housing 2 is made of metal. The housing 2 is made of, for example, an aluminum material. As shown in FIG. 2, the housing 2 includes a cylindrical housing main body 20, a first cover housing 21, and a second cover housing 22. Further, as shown in FIG. 3, the housing 2 includes a first cooling liquid port 23, a second cooling liquid port 24, and a cooling liquid channel 25.

As shown in FIG. 3, the housing main body 20 includes an outer peripheral surface 20a, an inner peripheral surface 20b, a first end surface 20c, and a second end surface 20d. The first cover housing 21 is fixed to the first end surface 20c of the housing main body 20 by fixing bolts 11, for example (refer to FIG. 2). The second cover housing 22 is fixed to the second end surface 20d of the housing main body 20 by fixing bolts 12, for example (refer to FIG. 2).

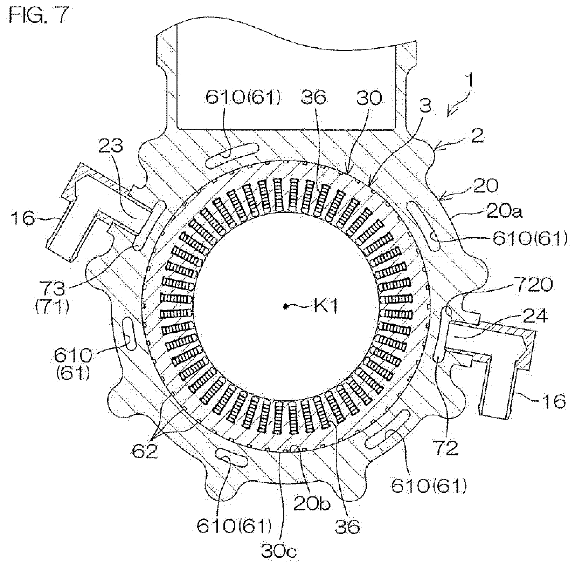

As shown in FIG. 7 being a cross-sectional view taken along E-E in FIG. 2, each of the first cooling liquid port 23 and the second cooling liquid port 24 is defined by an opening hole that is open in the outer peripheral surface 20a of the housing main body 20. Into each of the first cooling liquid port 23 and the second cooling liquid port 24, an L-shaped pipe fitting 16 is screwed therein, for example.

As shown in FIG. 3, the cooling liquid channel 25 is demarcated by the housing 2 so as to cause a cooling liquid to flow between the first cooling liquid port 23 and the second cooling liquid port 24. The first cooling liquid port 23 functions as a cooling liquid inlet to introduce the cooling liquid into the cooling liquid channel 25. The second cooling liquid port 24 functions as a cooling liquid outlet to discharge the cooling liquid that has flowed through the cooling liquid channel 25. The cooling liquid channel 25 includes a first coil end cooling channel Q1 and a second coil end cooling channel Q2, a first communication channel 61 (refer to FIG. 4) and a second communication channel 62 (refer to FIG. 5), and a first connection channel 71 and a second connection channel 72.

The first coil end cooling channel Q1 includes the first coil end 31b. The second coil end cooling channel Q2 includes the second coil end 31c. The first coil end cooling channel Q1 and the second coil end cooling channel Q2 are annular channels that form annular shapes surrounding the rotational axis K1. The first coil end cooling channel Q1 and the second coil end cooling channel Q2 are filled with the cooling liquid.

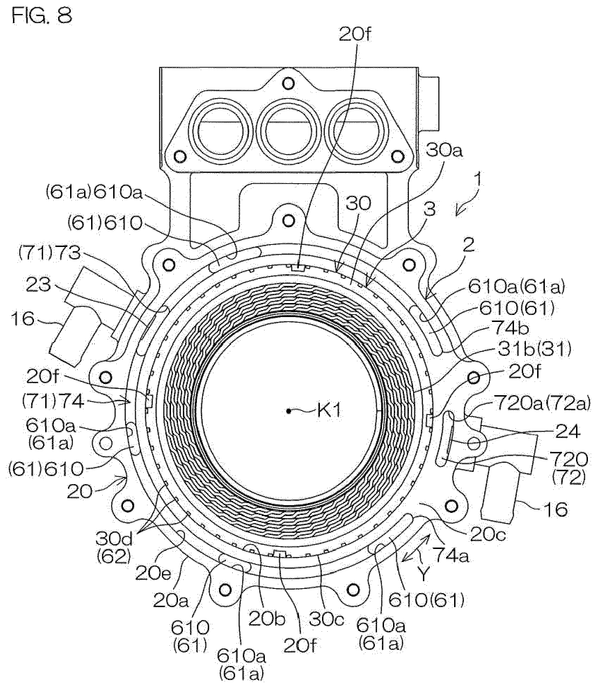

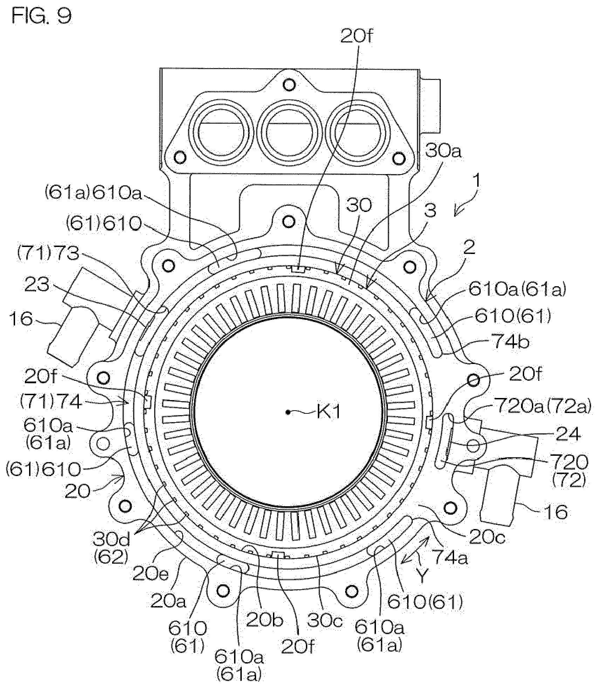

FIG. 8 is a cross-sectional view taken along F-F in FIG. 2, and FIG. 9 corresponds to a view of FIG. 8 from which the coil is removed. As shown in FIG. 3, the first connection channel 71 includes an axial channel 73 and a circumferential channel 74. As shown in FIG. 9, the circumferential channel 74 includes ends in a circumferential direction Y. The circumferential channel 74 is provided between a circumferential groove 20e provided on the first end surface 20c of the cylindrical housing main body 20 and an end surface 21g (refer to FIG. 3) of the first cover housing 21. The circumferential groove 20e includes ends in the circumferential direction Y. As shown in FIG. 3, the axial channel 73 is defined by an axial hole that extends in the axial direction X inside the wall thickness of the housing main body 20. The axial channel 73 includes one end 73a communicating with the first cooling liquid port 23 and the other end 73b communicating with the circumferential channel 74.

As shown in FIG. 4 being a cross-sectional view taken along B-O-C in FIG. 1, the first communication channel 61 includes a first end portion 61a and a second end portion 61b. The first communication channel 61 extends between the first end portion 61a and the second end portion 61b. The first communication channel 61 extends in the axial direction X inside the wall thickness of the housing main body 20.

As shown in FIG. 8, the first communication channel 61 is defined by a plurality of first axial holes 610 that are spaced apart in the circumferential direction Y around the rotational axis K1 and extend in the axial direction X. The first axial hole 610 includes a first end portion 610a that corresponds to the first end portion 61a of the first communication channel 61 and a second end portion 610b that corresponds to the second end portion 61b of the first communication channel 61.

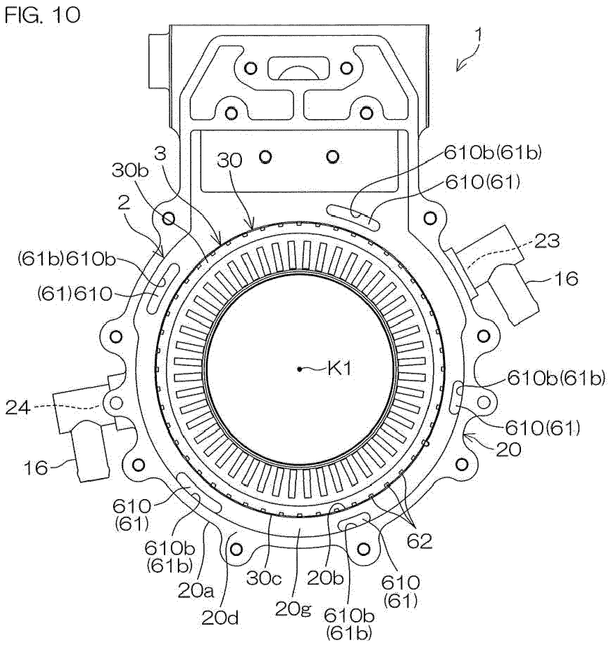

As shown in FIG. 10 being a cross-sectional view taken along G-G in FIG. 2, at least either of intervals of the plurality of first axial holes 610 in the circumferential direction Y and cross-sectional areas of the plurality of first axial holes 610 are non-uniform. In the example of FIG. 10, both of the intervals of the plurality of first axial holes 610 in the circumferential direction Y and the cross-sectional areas of the plurality of first axial holes 610 are non-uniform. Without limitation to this example, either of the intervals and cross-sectional areas may be non-uniform, or both of the intervals and cross-sectional areas may be uniform.

As shown in FIG. 4, the first end portion 61a of the first communication channel 61 is located adjacent to the first coil end cooling channel Q1 in a state of being separated radially outward R2 from the first coil end cooling channel Q1. The first communication channel 61 is located further radially outward R2 than the first coil end cooling channel Q1.

The first connection channel 71 makes the first end portion 61a communicate with the first cooling liquid port 23 (refer to FIG. 3 and FIG. 7). Specifically, as shown in FIG. 8, the first end portion 61a of the first communication channel 61 communicates with the circumferential channel 74 of the first connection channel 71. The circumferential channel 74 couples the first end portions 610a of the plurality of first axial holes 610 (first communication channel 61) with each other.

As shown in FIG. 4, the second end portion 61b of the first communication channel 61 (the second end portion 610b of the first axial hole 610) communicates with the second coil end cooling channel Q2. As shown in FIG. 10, the second end portion 61b of the first communication channel 61 is opened in an annular step portion 20g that is provided on the inner peripheral surface 20b of the housing main body 20 and faces the second cover housing 22.

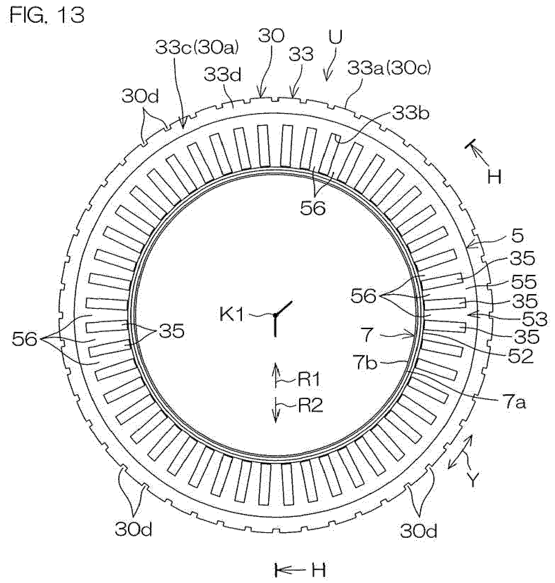

As shown in FIG. 4, the second communication channel 62 extends between the first coil end cooling channel Q1 and the second coil end cooling channel Q2 so as to communicate the first coil end cooling channel Q1 and the second coil end cooling channel Q2 with each other. The second communication channel 62 is provided between the inner peripheral surface 20b of the housing main body 20 and an outer peripheral surface 30c of the stator core 30. Specifically, the second communication channel 62 includes a plurality of axial grooves 30d (refer to FIG. 13) that are provided on the outer peripheral surface 30c of the stator core 30 and spaced in the circumferential direction Y. The second communication channel 62 is defined by the plurality of axial grooves 30d and the inner peripheral surface 20b of the housing main body 20. The first communication channel 61 is located further radially outward R2 than the second communication channel 62.

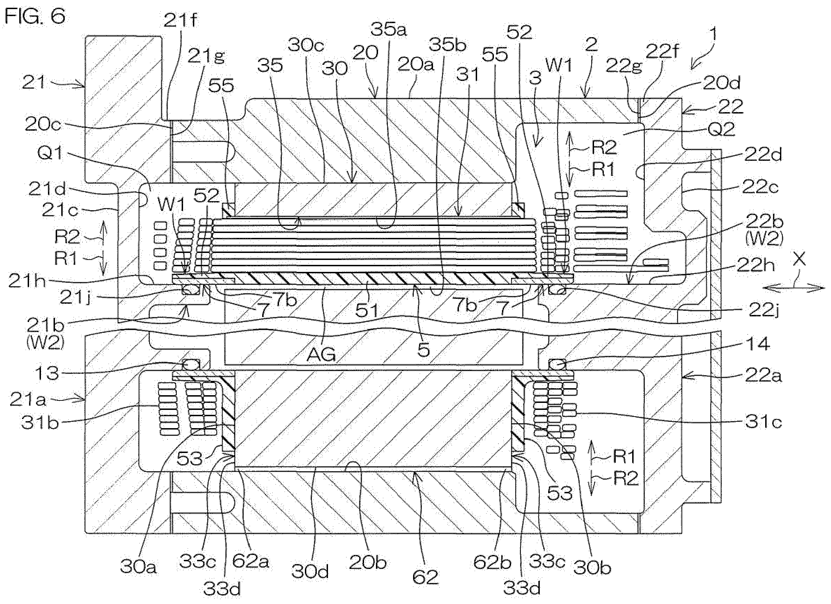

As shown in FIG. 6, which is a partially enlarged view of FIG. 5, the second communication channel 62 includes a first end portion 62a and a second end portion 62b. The first end portion 62a of the second communication channel 62 communicates with the first coil end cooling channel Q1. The second end portion 62b of the second communication channel 62 communicates with the second coil end cooling channel Q2.

As shown in FIG. 3, the second connection channel 72 makes the first coil end cooling channel Q1 communicate with the second cooling liquid port 24 as the cooling liquid outlet. The second connection channel 72 includes a first end portion 72a and a second end portion 72b. The first end portion 72a of the second connection channel 72 communicates with the first coil end cooling channel Q1. The second end portion 72b of the second connection channel 72 communicates with the second cooling liquid port 24. The second connection channel 72 includes a second axial hole 720 that extends in the axial direction X inside the wall thickness of the housing main body 20. The second axial hole 720 includes a first end portion 720a that corresponds to the first end portion 72a of the second connection channel 72 and a second end portion 720b that corresponds to the second end portion 72b of the second connection channel 72.

As shown in FIG. 8 being a cross-sectional view taken along F-F in FIG. 2, the circumferential channel 74 includes a pair of circumferential end portions 74a, 74b. One end (first end portion 72a) of the second connection channel 72 including the second axial hole 720 is located at a position spaced in the circumferential direction Y with respect to the pair of circumferential end portions 74a, 74b of the circumferential channel 74.

As shown in FIG. 3, the cooling liquid channel 25 causes the cooling liquid having flowed in from the first cooling liquid port 23 as the cooling liquid inlet to flow to the first connection channel 71. As shown in FIG. 4, the cooling liquid channel 25 further causes the cooling liquid to flow from the first connection channel 71, through the first communication channel 61, the second coil end cooling channel Q2, the second communication channel 62, the first coil end cooling channel Q1, and the second connection channel 72 in order, to the second cooling liquid port 24 (refer to FIG. 7) as the cooling liquid outlet. The first and second coil ends 31b and 31c are thus cooled. Further, the housing 2 and the stator core 30 are cooled.

As shown in FIG. 5, the first cover housing 21 includes a main plate 21a and a cylindrical wall 21b (second cylindrical wall W2). The main plate 21a includes an outer side surface 21c, an inner side surface 21d, a bearing holding hole 21e, and an annular projection 21f.

The annular projection 21f is provided on the inner side surface 21d in an annular shape centered on the rotational axis K1. An end surface 21g of the annular projection 21f corresponds to the end surface of the first cover housing 21.

The end surface 21g of the first cover housing 21 covers the first end surface 20c of the housing main body 20 through a gasket (not shown). The gasket provides a seal between the first end surface 20c of the housing main body 20 and the end surface 21g of the first cover housing 21. Although not illustrated, in FIG. 8, the gasket surrounds the circumferential groove 20e that defines the circumferential channel 74, and the opening of the first end portion 72a of the second connection channel 72, respectively, so as to prevent the circumferential channel 74 and the second connection channel 72 from communicating with each other.

As shown in FIG. 5, the cylindrical wall 21b extends in the axial direction X from the inner side surface 21d. The cylindrical wall 21b has a cylindrical shape surrounding the rotational axis K1. As shown in FIG. 6, the cylindrical wall 21b includes an outer peripheral surface 21h that includes a cylindrical surface centered on the rotational axis K1 and a housing groove 21j provided on the outer peripheral surface 21h. In the housing groove 21j, a seal member 13 is housed, which is, for example, an O-ring.

As shown in FIG. 5, the second cover housing 22 includes a main plate 22a and a cylindrical wall 22b (second cylindrical wall W2). The main plate 22a includes an outer side surface 22c, an inner side surface 22d, and an annular projection 22f.

The annular projection 22f is provided on the inner side surface 22d of the main plate 22a in an annular shape surrounding the rotational axis K1. An end surface 22g of the annular projection 22f corresponds to an end surface of the second cover housing 22. The end surface 22g of the second cover housing 22 covers the second end surface 20d of the housing main body 20 through a gasket (not shown). The gasket provides a seal between the second end surface 20d of the housing main body 20 and the end surface 22g of the second cover housing 22.

The cylindrical wall 22b extends in the axial direction X from the inner side surface 22d of the main plate 22a. As shown in FIG. 6, the cylindrical wall 22b has a cylindrical shape surrounding the rotational axis K1. The cylindrical wall 22b includes an outer peripheral surface 22h, an inner peripheral surface 22i, a housing groove 22j, and a bearing holding portion 22k.

The outer peripheral surface 22h of the cylindrical wall 22b includes a cylindrical surface centered on the rotational axis K1. The housing groove 22j extends in the circumferential direction of the outer peripheral surface 22h. In the housing groove 22j, a seal member 14 is housed, which is, for example, an O-ring. The inner peripheral surface 22i of the cylindrical wall 22b includes a cylindrical surface centered on the rotational axis K1. The bearing holding portion 22k is provided in the inner peripheral surface 22i of the cylindrical wall 22b.

As shown in FIG. 5, the output shaft 6 is rotatably supported by the housing 2 through a pair of bearings 15, 15 held by an inner peripheral surface of the bearing holding hole 21e of the first cover housing 21 and the bearing holding portion 22k of the second cover housing 22. The pair of bearings 15, 15 are, for example, sealed bearings. The rotor 4 includes the rotor core 40 that is able to rotate integrally with the output shaft 6 and permanent magnets (not shown) located on the rotor core 40 at equal intervals in the circumferential direction.

Next, description will be provided of the stator 3.

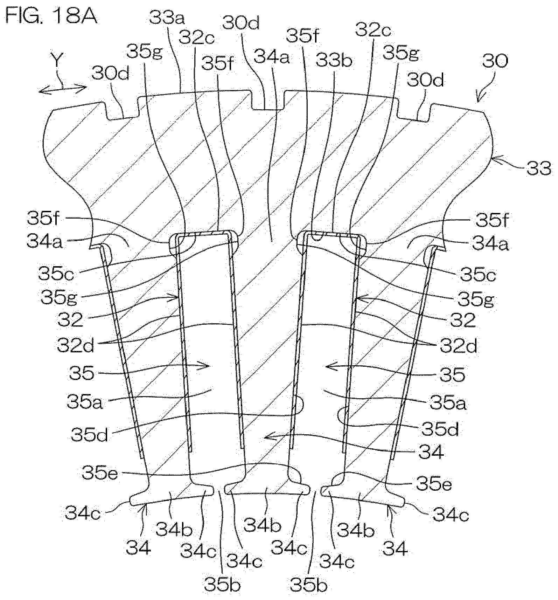

As shown in FIG. 5, the stator 3 includes the stator core 30, the coil 31, and an insulation paper 32 (refer to FIG. 18A as well). The stator core 30 is constructed by laminating a plurality of plate-shaped electromagnetic steel plates. The stator core 30 includes a first axial end surface 30a and a second axial end surface 30b as a pair of axial end surfaces and the outer peripheral surface 30c. The stator core 30 is fitted to the inner peripheral surface 20b of the housing main body 20. The stator core 30 is press-fitted or shrink-fitted into the housing 2 (housing main body 20) in some cases.

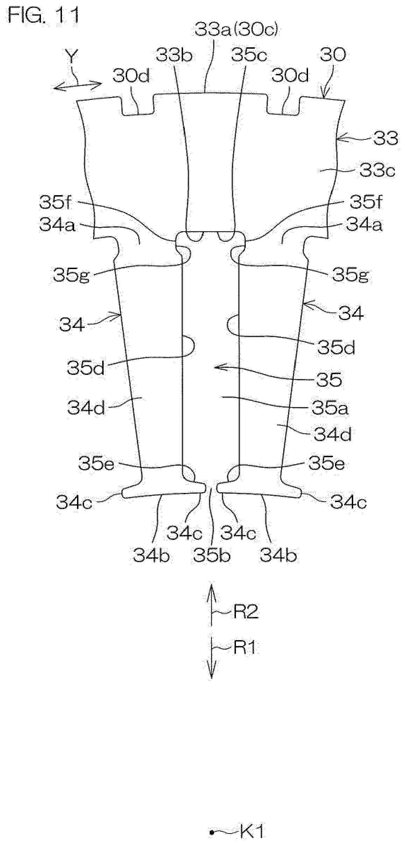

FIG. 11 is an enlarged view of a main portion of the stator core 30. As shown in FIG. 11, the stator core 30 includes a yoke 33, a plurality of teeth 34, and a plurality of slots 35. The yoke 33 has a shaft shape and extends in the axial direction X along the rotational axis K1 and an annular shape surrounding the rotational axis K1. The yoke 33 includes an outer periphery 33a, an inner periphery 33b, and a pair of axial end surfaces 33c. The plurality of teeth 34 are located on the inner periphery 33b of the yoke 33 at intervals in the circumferential direction Y around the rotational axis K1.

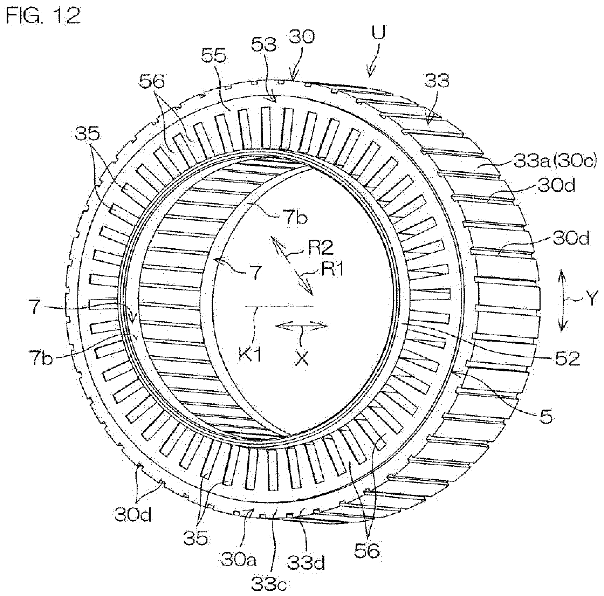

As shown in FIG. 12, the axial grooves 30d defining the second communication channel 62 (refer to FIG. 8) are located on the outer periphery 30c of the stator core 30 (the outer periphery 33a of the yoke 33) at equal intervals in the circumferential direction Y. As shown in FIG. 11, the axial grooves 30d are located radially outward R2 of the teeth 34. Specifically, the axial grooves 30d are located radially outward R2 of central positions in the circumferential direction Y of the teeth 34. The axial grooves 30d may be located radially outward R2 of all the teeth 34, or may be located radially outward R2 of every two or more teeth 34 in the circumferential direction Y.

As shown in FIG. 8, the housing main body 20 includes a plurality of projections 20f that protrude radially inward R1 from the inner peripheral surface 20b. The plurality of projections 20f are spaced apart in the circumferential direction Y. The projections 20f position the stator core 30 in the axial direction X by making contact with the first axial end surface 30a of the stator core 30. The projections 20f make contact with the first axial end surface 30a at positions to avoid openings of the axial grooves 30d that are opened in the first axial end surface 30a.

The positioning of the stator core 30 in the axial direction X may be performed, in an assembly step, by using jigs (not shown). In that case, it is not necessary to provide the projections 20f.

The plurality of teeth 34 protrude radially inward R1 from the inner periphery 33b of the yoke 33. Each of the teeth 34 includes a base end 34a and a tip end 34b. The base end 34a is coupled with the yoke 33. The tip end 34b is located radially inward R1 relative to the base end 34a. The tip end 34b includes a pair of protrusions 34c that protrude on both sides in the circumferential direction Y.

Between adjacent teeth 34 in the circumferential direction Y, the slots 35 are provided. The teeth 34 and the slots 35 are alternately located in the circumferential direction Y. The slots 35 penetrate the stator core 30 in the axial direction X.

The slot 35 includes a coil housing portion 35a and a slot opening portion 35b. The coil housing portion 35a houses the coil 31. The slot opening portion 35b is provided between the protrusions 34c of adjacent teeth 34. The slot opening portion 35b opens the coil housing portion 35a radially inward R1.

An inner wall surface of the slot 35 includes a bottom wall surface 35c, a pair of side wall surfaces 35d, and a pair of holding wall surfaces 35e. The bottom wall surface 35c is defined by the inner periphery 33b of the yoke 33 and faces radially inward R1. The pair of side wall surfaces 35d are provided by side surfaces of adjacent teeth 34 and oppose each other in the circumferential direction Y. The pair of holding wall surfaces 35e correspond to wall surfaces of the pair of protrusions 34c and are surfaces facing radially outward R2.

A pair of corner portions 35f are provided by the pair of side wall surfaces 35d (wall surfaces of the teeth 34) and the bottom wall surface 35c (the inner periphery 33b of the yoke 33). The slot 35 includes the corner portions 35f. A portion of the side wall surface 35d that provides each of the corner portions 35f includes a curved concave inner surface 35g. Each of the corner portions 35f is thus expanded in the circumferential direction Y.

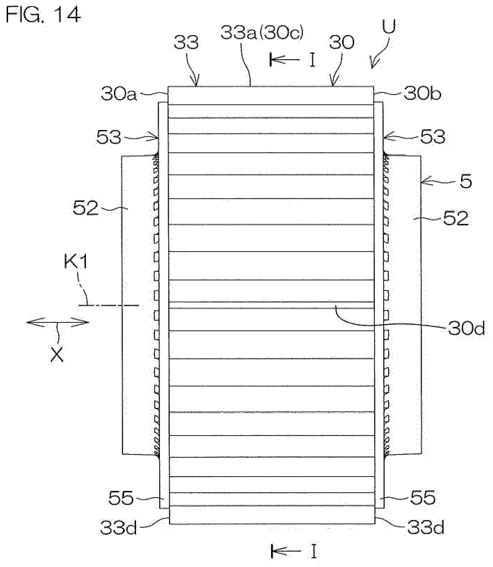

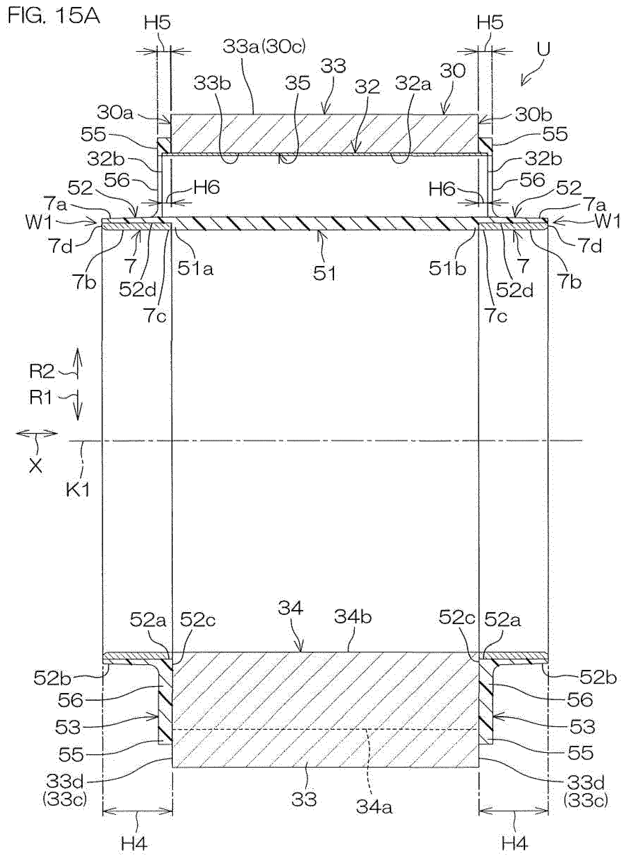

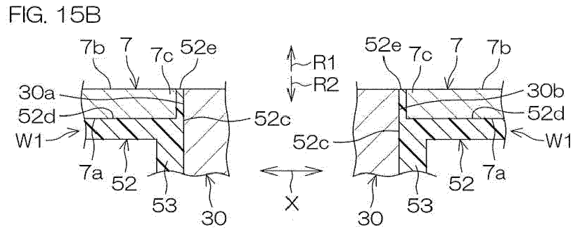

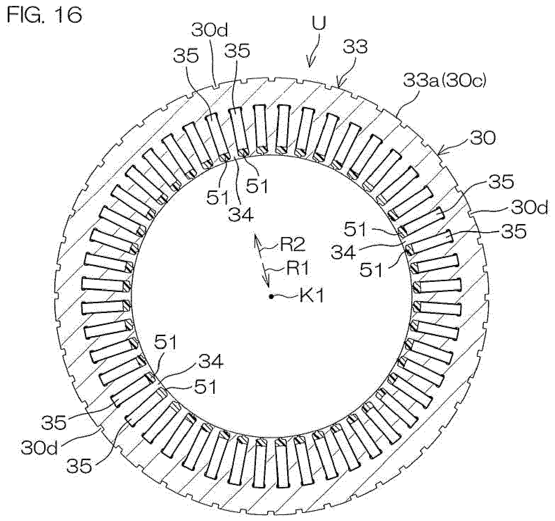

FIG. 12 is a perspective view of a stator core assembly U including the stator core 30. FIG. 13 is a plan view of the stator core assembly U. FIG. 14 is a side view of the stator core assembly U. FIG. 15A is a longitudinal cross-sectional view of the stator core assembly U, and corresponds to a cross-sectional view taken along H-H in FIG. 13. FIG. 15B is an enlarged cross-sectional view of partially enlarged FIG. 15A. FIG. 16 is a cross-sectional view taken along I-I in FIG. 14.

As shown in FIG. 12, the stator core assembly U includes the stator core 30, the plastic portion 5, a metal ring 7, and the insulation paper 32 (refer to FIG. 15A and FIG. 18A). The stator core assembly U is a sub-assembly at a stage before the coil 31 is mounted. That is, at the time of manufacturing, the coil 31 is to be mounted on the stator core assembly U as a sub-assembly.

Next, description will be provided of the coil 31.

As shown in FIG. 5, the coil 31 includes a housed portion 31a and the first coil end 31b and the second coil end 31c as a pair of coil ends. The housed portion 31a is housed in the coil housing portion 35a of the slot 35. The first coil end 31b and the second coil end 31c protrude in the axial direction X from the first axial end surface 30a and the second axial end surface 30b of the stator core 30, respectively.

The coil 31 is mounted on the stator core 30 in a state of being housed partially inside the plurality of slots 35. The coil 31 is a 3-phase coil consisting of a U-phase, a V-phase, and a W-phase. Each phase coil is insulated from the stator core 30 through the insulation paper 32 located in the slot 35.

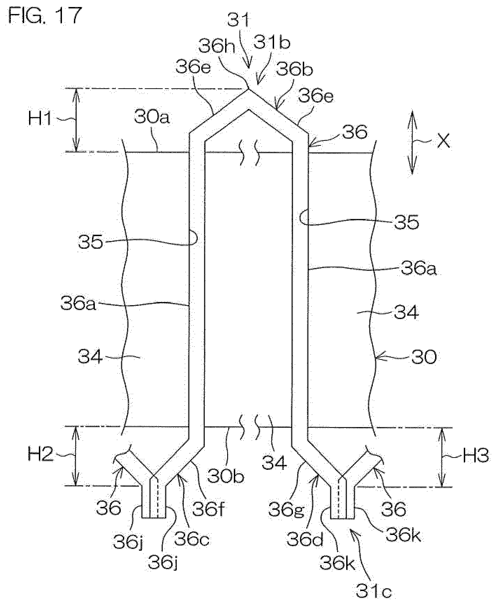

Each phase coil 31 is constructed, for example, by mutually connecting a plurality of segment coils 36 (refer to FIG. 7). FIG. 17 is a schematic view showing a disposition example of the segment coil 36 when the stator core 30 is viewed from a radially inward R1 side. As shown in FIG. 17, the segment coil 36 includes a pair of inserting portions 36a, a bridging portion 36b, and a pair of extended portions 36c, 36d. The pair of inserting portions 36a are inserted into the slots 35 different from each other. The bridging portion 36b couples first ends of the pair of inserting portions 36a with each other. The pair of extended portions 36c, 36d are respectively extended from second ends of the pair of inserting portions 36a.

The bridging portion 36b is located by extending out from either one of the axial end surfaces (for example, the first axial end surface 30a) of the stator core 30, and defines a portion of the coil end. The pair of extended portions 36c, 36d are located by extending out from the other axial end surface (for example, the second axial end surface 30b) of the stator core 30, and defines a portion of the coil end. Each of the extended portions 36c, 36d is connected with the extended portions 36c, 36d of another segment coil 36 by, for example, welding, etc.

Specifically, in the first coil end 31b, the bridging portion 36b of the segment coil 36 includes a pair of inclined portions 36e that are inclined in mutually opposite directions with respect to the axial direction X as viewed from a radially inward R1 side. An apex portion 36h of the bridging portion 36b is provided at the intersection of the pair of inclined portions 36e.

In the second coil end 31c, the segment coil 36 includes an inclined portion 36f and a joint end portion 36j at one extended portion 36c. The inclined portion 36f is inclined with respect to the axial direction X as viewed from a radially inward R1 side. The joint end portion 36j defines an extended end portion of the one extended portion 36c and extends, for example, in the axial direction X. The joint end portion 36j is joined with the joint end portion 36j of another segment coil 36 by, for example, welding.

Further, in the second coil end 31c, the segment coil 36 includes an inclined portion 36g and a joint end portion 36k at the other extended portion 36d. The inclined portion 36g is inclined with respect to the axial direction X as viewed from a radially inward R1 side. The joint end portion 36k defines an extended end portion of the other extended portion 36d and extends, for example, in the axial direction X. The joint end portion 36k is joined with the joint end portion 36k of another segment coil 36 by, for example, welding.

Here, a maximum protrusion height of the inclined portion 36e of the segment coil 36 from the first axial end surface 30a of the stator core 30 is defined as H1. Further, a maximum protrusion height of the inclined portion 36f of the one extended portion 36c of the segment coil 36 from the second axial end surface 30b of the stator core 30 is defined as H2. Further, a maximum protrusion height of the inclined portion 36g of the other extended portion 36d of the segment coil 36 from the second axial end surface 30b of the stator core 30 is defined as H3.

Next, description will be provided of the insulation paper 32.

As shown in FIG. 15A, the insulation paper 32 is located in the coil housing portion 35a of the slot 35. The insulation paper 32 includes a housed portion 32a and a pair of protruding portions 32b. The housed portion 32a is housed in the coil housing portion 35a of the slot 35. Each of the pair of protruding portions 32b protrudes in the axial direction X from a corresponding axial end surface 30a, 30b of the stator core 30.

As shown in FIG. 18A, the insulation paper 32 is provided, as viewed in the axial direction X, as a groove including a bottom portion 32c and a pair of side portions 32d. The bottom portion 32c of the insulation paper 32 is located along the bottom wall surface 35c. Each of the pair of side portions 32d of the insulation paper 32 is located along a corresponding side wall surface 35d.

However, in place of the insulation paper 32, an insulating plastic layer that is coated on the inner wall surface of the slot 35 may be used, although this is not illustrated.

Next, description will be provided of the plastic portion 5.

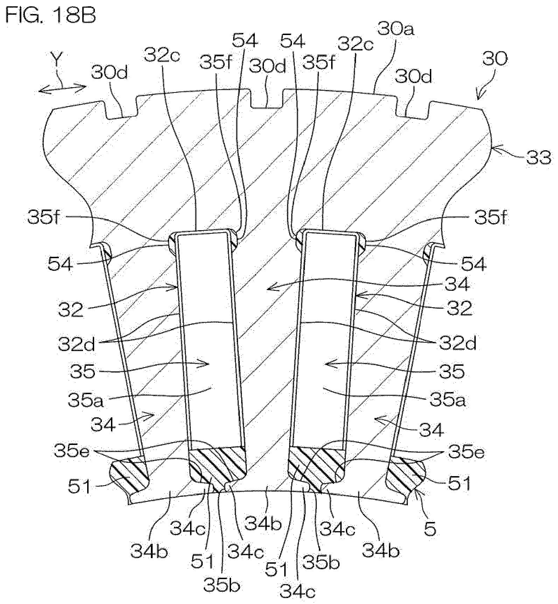

As shown in FIG. 15A, the plastic portion 5 is integral with the stator core 30. The plastic portion 5 includes a plurality of blocking portions 51 (third portions, refer to FIG. 16), a pair of cylindrical walls 52 (second portions), a pair of covering portions 53 (first portions), and a plurality of reinforcing portions 54 (refer to FIG. 18B). Each covering portion 53 includes an annular covering portion 55 and a plurality of arm portions 56.

As shown in FIG. 18B, which is a partially enlarged view of FIG. 16, each blocking portion 51 extends in the axial direction X so as to block the slot opening portion 35b of a corresponding slot 35. Each blocking portion 51 blocks the slot opening portion 35b from the inside of the slot 35, that is, a radially inward R1 side. Each blocking portion 51 blocks the slot opening portion 35b so as not to protrude radially inward R1 from the tip ends 34b of the teeth 34 adjacent in the circumferential direction Y. Each blocking portion 51 includes a first end 51a and a second end 51b in the axial direction X.

The blocking portion 51 is held by apex surfaces of a pair of protrusions 34c in the slot opening portion 35b. A portion of the blocking portion 51 enters the coil housing portion 35a. The blocking portion 51 is held, in the coil housing portion 35a, by the pair of side wall surfaces 35d and the pair of holding wall surfaces 35e of the pair of protrusions 34c. Thus, the blocking portion 51 is firmly held on the stator core 30.

As shown in FIG. 15A, the pair of cylindrical walls 52 are located on both sides in the axial direction X of the stator core 30. The pair of covering portions 53 are located on both sides in the axial direction X of the stator core 30. The pair of cylindrical walls 52 each protrude in the axial direction X from the corresponding one of the first axial end surface 30a and the second axial end surface 30b of the stator core 30. The pair of cylindrical walls 52 are concentric with the stator core 30. Each cylindrical wall 52 includes one end 52a in the axial direction X and the other end 52b in the axial direction X. The one end 52a of each cylindrical wall 52 includes a contact portion 52c that makes contact with a corresponding axial end surface (the first axial end surface 30a or the second axial end surface 30b) of the stator core 30.

The pair of cylindrical walls 52 are coupled with the plurality of blocking portions 51. One cylindrical wall 52 is coupled with first ends 51a of the plurality of blocking portions 51. The other cylindrical wall 52 is coupled with second ends 51b of the plurality of blocking portions 51. That is, the plurality of blocking portions 51 couple the pair of cylindrical walls 52 with each other.

Next, description will be provided of the metal ring 7.

As shown in FIG. 15A, the metal ring 7 is held on an inner peripheral surface 52d of each of the pair of cylindrical walls 52. A pair of the metal rings 7 are located on both sides in the axial direction X of the stator core 30. The metal rings are made of, for example, stainless steel. The metal ring 7 includes an outer peripheral surface 7a, an inner peripheral surface 7b, a first end 7c, and the other end portion 7d.

At least a portion of the outer peripheral surface 7a of the metal ring 7 is covered by and molded to the cylindrical wall 52 of the plastic portion 5. The metal ring 7 is held by the plastic portion 5. The metal ring 7 is integral with the cylindrical wall 52 and held on the stator core 30. First cylindrical walls W1 each including the cylindrical wall 52 and the metal ring 7 that are mutually integrated are provided as a pair. The pair of first cylindrical walls W1 are concentric with the stator core 30. The cylindrical wall 52 of the plastic portion 5 defines a portion of the first cylindrical wall W1.

The first end 7c of the metal ring 7 opposes the axial end surface 30a, 30b of the stator core 30 in the axial direction X. The first end 7c of the metal ring 7 is separated from the axial end surface 30a, 30b of the stator core 30.

Specifically, as shown in FIG. 15B, the first end 52a of the cylindrical wall 52 includes an interposing portion 52e that is interposed between the first end 7c of the metal ring 7 and the axial end surface 30a, 30b of the stator core 30. The plastic portion 5 includes the interposing portion 52e. The interposing portion 52e defines a portion of the first cylindrical wall W1. The contact portion 52c is provided in the interposing portion 52e. The interposing portion 52e includes the contact portion 52c. The interposing portion 52e may be provided over the entire periphery in the circumferential direction Y, or may be provided on a portion of the circumferential direction Y.

Further, as shown in FIG. 6, in terms of a protrusion height in the axial direction X from a corresponding axial end surface 30a, 30b of the stator core 30, a maximum protrusion height of the coil end 31b, 31c is higher than a maximum protrusion height of the metal ring 7.

Specifically, as shown in FIG. 17, in terms of the protrusion height in the axial direction X from the first axial end surface 30a of the stator core 30, a maximum protrusion height H1 of the inclined portions 36e of the segment coil 36 (maximum protrusion height of the apex portion 36h of the bridging portion 36b) corresponds to a maximum protrusion height of the coil end 31b. The maximum protrusion height of the first coil end 31b (maximum protrusion height H1 of the inclined portions 36e) is higher than a maximum protrusion height H4 (refer to FIG. 15A) of the metal ring 7.

Further, in terms of the protrusion height in the axial direction X from the second axial end surface 30b of the stator core 30, a maximum protrusion height of the second coil end 31c corresponds to a higher one of a maximum protrusion height of the joint end portion 36j and a maximum protrusion height of the joint end portion 36k of the segment coil 36 (in a case of mutually equal heights, both thereof). The maximum protrusion height of the second coil end 31c is higher than the maximum protrusion height H4 of the metal ring 7.

Further, in terms of the protrusion height in the axial direction X from the second axial end surface 30b of the stator core 30, the maximum protrusion height H2 of the inclined portion 36f and the maximum protrusion height H3 of the inclined portion 36g of the segment coil 36 are higher than the maximum protrusion height H4 of the metal ring 7.

Further, in terms of the protrusion height in the axial direction X from the second axial end surface 30b of the stator core 30, each joint end portion 36j, 36k of the segment coil 36 is located at a position higher than the maximum protrusion height H4 of the metal ring 7.

As shown in FIG. 6, into one first cylindrical wall W1, the cylindrical wall 21b (second cylindrical wall W2) of the first cover housing 21 is insertion-fitted, for example. The one first cylindrical wall W1 is fitted to the outer peripheral surface 21h of the cylindrical wall 21b of the first cover housing 21. Specifically, the inner peripheral surface 7b of the metal ring 7 of the one first cylindrical wall W1 is fitted to the outer peripheral surface 21h of the cylindrical wall 21b (second cylindrical wall W2) of the first cover housing 21.

The seal member 13 housed in the housing groove 21j on the outer peripheral surface 21h of the cylindrical wall 21b (second cylindrical wall W2) of the first cover housing 21 provides a seal between the inner peripheral surface 7b of the metal ring 7 of the one first cylindrical wall W1 and the outer peripheral surface 21h of the cylindrical wall 21b (second cylindrical wall W2).

Into the other first cylindrical wall W1, the cylindrical wall 22b (second cylindrical wall W2) of the second cover housing 22 is insertion-fitted. The other first cylindrical wall W1 is fitted to the outer peripheral surface 22h of the cylindrical wall 22b of the second cover housing 22. Specifically, the inner peripheral surface 7b of the metal ring 7 of the other first cylindrical wall W1 is fitted to the outer peripheral surface 22h of the cylindrical wall 22b (second cylindrical wall W2) of the second cover housing 22.

The seal member 14 housed in the housing groove 22j on the outer peripheral surface 22h of the cylindrical wall 22b (second cylindrical wall W2) of the second cover housing 22 provides a seal between the inner peripheral surface 7b of the metal ring 7 of the other first cylindrical wall W1 and the outer peripheral surface 22h of the cylindrical wall 22b (second cylindrical wall W2).

The housing 2 defines the first coil end cooling channel Q1 and the second coil end cooling channel Q2 at a radially outward R2 side of the first cylindrical wall W1 and the second cylindrical wall W2 that are fitted together. The cooling liquid to cool the first and second coil ends 31b and 31c is caused to flow through the first coil end cooling channel Q1 and the second coil end cooling channel Q2.

As shown in FIG. 15A, the pair of covering portions 53 are coupled with the corresponding one of the cylindrical walls 52 and respectively cover the pair of axial end surfaces (the first axial end surface 30a and the second axial end surface 30b) of the stator core 30. As shown in FIG. 12, the annular covering portion 55 included in the covering portion 53 covers the axial end surface 33c of the yoke 33. The plurality of arm portions 56 are provided along axial end surfaces 34d (refer to FIG. 11) of the teeth 34. As shown in FIG. 15A, the plurality of arm portions 56 included in the covering portion 53 couple the one end 52a as an axial end portion of the cylindrical wall 52 with the annular covering portion 55.

The annular covering portion 55 covers a portion of the axial end surface 33c of the yoke 33. As shown in FIG. 6, the axial end surface 33c of the yoke 33 includes an exposed portion 33d that is exposed to the first coil end cooling channel Q1 and the second coil end cooling channel Q2. The exposed portion 33d is located radially outward R2 of the annular covering portion 55. The exposed portion 33d is exposed to the first coil end cooling channel Q1 and the second coil end cooling channel Q2 at the radially outward R2 side of the annular covering portion 55.

As shown in FIG. 15A, the protruding portions 32b of the insulation paper 32 are held by the covering portion 53. Specifically, the protruding portions 32b of the insulation paper 32 are held by the annular covering portion 55. Further, in terms of a protrusion height in the axial direction X from the axial end surface 30a, 30b of the stator core 30, a maximum protrusion height H5 of the annular covering portion 55, which corresponds to a maximum protrusion height of the covering portion 53, is higher than a maximum protrusion height H6 of the protruding portion 32b.

As shown in FIG. 18B, the reinforcing portions 54 are located as a pair for each of the slots 35. The reinforcing portions 54 extend along the respective corner portions 35f of the slot 35 in the axial direction X (direction orthogonal to the page plane in FIG. 18B), and are coupled with the arm portions 56 of the covering portions 53. The reinforcing portions 54 couple the arm portions 56 of the pair of covering portions 53 with each other.

When the insulation paper 32 is inserted into the slot 35, as shown in FIG. 18B, the reinforcing portions 54 extend in the axial direction X so as to block between the curved concave inner surface 35g of the corner portion 35f and a corresponding side portion 32d of the insulation paper 32.

According to a preferred embodiment, as shown in FIG. 15A, the first cylindrical wall W1 includes, at its one end in the axial direction X, the contact portion 52c that makes contact with the axial end surface 30a, 30b of the stator core 30. Into that first cylindrical wall W1, as shown in FIG. 6, the second cylindrical wall W2 (cylindrical wall 21b, 22b) of the metal housing 2 is insertion-fitted. The inner peripheral surface 7b of the metal ring 7 included in the first cylindrical wall W1 is fitted to the outer peripheral surface 21h, 22h of the cylindrical wall 21b, 22b that is the metal second cylindrical wall W2. Therefore, sufficient sealability occurs with a change in temperature between the first cylindrical wall W1 and the second cylindrical wall W2. The cooling liquid in the coil end cooling channel Q1, Q2 is thus restricted from entering the air gap AG, and the increase in mechanical loss is prevented. As a result, the efficiency is increased.

Further, the metal ring 7 is held by the plastic portion 5 that is integral with the stator core 30. Therefore, holding rigidity of the metal ring 7 is increased.

Further, the plastic portion 5 includes the covering portion 53 as the first portion that covers the axial end surface 30a, 30b of the stator core 30, and the cylindrical wall 52 as the second portion that covers at least a portion of the outer peripheral surface 7a of the metal ring 7 and defines a portion of the first cylindrical wall W1. At least a portion of the outer peripheral surface 7a of the metal ring 7 is covered by the plastic portion 5, by which the holding rigidity of the metal ring 7 is increased.

Further, as shown in FIG. 6, the plastic portion 5 includes the blocking portion 51 (refer to FIG. 18B) as the third portion that extends in the axial direction X so as to block the slot opening portion 35b. Therefore, even when a cooling liquid enters the interior of the slot 35, the cooling liquid is prevented from entering the air gap AG through the slot opening portion 35b. Therefore, the increase in mechanical loss is prevented, and the efficiency is increased.

Further, as shown in FIG. 15A, each one pair of the metal rings 7 and the cylindrical walls 52 (the second portions) of the plastic portion 5 are located on both sides in the axial direction X of the stator core 30. The blocking portion 51 (the third portion) couples the pair of cylindrical walls 52 (the second portions) with each other. Therefore, the holding rigidity for the pair of metal rings 7 that are located on both sides in the axial direction X of the stator core 30 is increased.

Further, as shown in FIG. 15B, the first end 7c in the axial direction X opposing the axial end surface 30a, 30b of the stator core 30 is included in the metal ring 7, and the first end 7c is separated from the axial end surface 30a, 30b. Contact between the stator core 30 and the metal ring 7 is thus avoided. Therefore, a loss that occurs in the metal ring 7 is prevented and increases the efficiency.

Further, as shown in FIG. 15B, the plastic portion 5 includes the interposing portion 52e interposed between the axial end surface 30a, 30b of the stator core 30 and the first end 7c of the metal ring 7. The interposing portion 52e defines a portion of the first cylindrical wall W1. In the interposing portion 52e, the contact portion 52c that makes contact with the axial end surface 30a, 30b of the stator core 30 is provided. Contact between the stator core 30 and the metal ring 7 is avoided by the interposing portion 52e of the plastic portion 5. Therefore, a loss that occurs in the metal ring 7 is prevented and increases the efficiency.

Further, as shown in FIG. 7, the coil 31 is provided by the plurality of segment coils 36. As shown in FIG. 17, in terms of the protrusion height in the axial direction X from the first axial end surface 30a of the stator core 30, the maximum protrusion height of the first coil end 31b (maximum protrusion height H1 of the inclined portions 36e) is higher than the maximum protrusion height H4 (refer to FIG. 15A) of the metal ring 7. Therefore, the metal ring 7 has no effect when the segment coil 36 having the inclined portions 36e is assembled to the stator core 30.

Further, in terms of the protrusion height in the axial direction X from the second axial end surface 30b of the stator core 30, the maximum protrusion height H2 of the inclined portion 36f and the maximum protrusion height H3 of the inclined portion 36g of the segment coil 36 are higher than the maximum protrusion height H4 (refer to FIG. 15A) of the metal ring 7. Further, in terms of the protrusion height in the axial direction X from the second axial end surface 30b of the stator core 30, each joint end portion 36j, 36k of the segment coil 36 is located at a position higher than the maximum protrusion height H4 of the metal ring 7. Therefore, the metal ring 7 has no effect when the joint end portion 36j, 36k of the segment coil 36 is joined with another segment coil 36.

Further, as shown in FIG. 6, each of the seal members 13, 14 is housed in the housing groove 21j, 22j that is provided on the outer peripheral surface 21h, 22h of the second cylindrical wall W2 (cylindrical wall 21b, 22b). The seal member 13, 14 housed in the housing groove 21j, 22j provides a seal between the outer peripheral surface 21h, 22h of the second cylindrical wall W2 (cylindrical wall 21b, 22b) and the inner peripheral surface 7b of the metal ring 7. Therefore, sealing performance between the metal ring 7 and the second cylindrical wall W2 is improved.

Further, the coil end cooling channel Q1, Q2 is filled with the cooling liquid. Therefore, the cooling effect is high.

According to an alternative embodiment the reinforcing portions 54 of the plastic portion 5 may not be provided. Further, in a case where the segment coils 36 of the coil 31 are made of conductor wires for which the conductor surface is coated with an insulating film, the insulation paper 32 may not be provided. The interposing portion 52e may not be provided between the first end 7c of the metal ring 7 and the axial end surface 30a, 30b of the stator core 30. Further, a groove (for example, an axial groove) defining the second communication channel 62 may be provided on the inner peripheral surface 20b of the housing main body 20 instead of being provided on the outer peripheral surface 30c of the stator core 30.

## Claims

1. An electric motor (1) comprising:
a stator (3) including a stator core (30) and a coil (31), the stator core (30) including a yoke (33) extending in an axial direction (X) along a rotational axis (K1) and annularly surrounding the rotational axis (K1), a plurality of teeth (34) located on an inner periphery (33b) of the yoke (33) and spaced apart at intervals in a circumferential direction (Y) around the rotational axis (K1), and a plurality of slots (35) between adjacent teeth (34), each of the plurality of slots (35) including a coil housing (35a) that houses the coil (31) and a slot opening (35b) that opens the coil housing (35a) radially inward (R1), the coil (31) including a coil end (31b, 31c) that protrudes in the axial direction (X) from an axial end surface (30a, 30b) of the stator core (30);
a rotor (4) spaced radially inward (R1) from the stator (3) by an air gap (AG) and rotatable around the rotational axis (K1);
a first cylindrical wall (W1) including at one end in the axial direction (X) a contact portion (52c) in contact with the axial end surface (30a, 30b) of the stator core (30), the first cylindrical wall (W1) being concentric with the stator core (30); and
a metal housing (2) to house the stator (3) and the rotor (4), the metal housing (2) including a second cylindrical wall (W2) inserted into the first cylindrical wall (W1), and defining a coil end cooling channel (Q1, Q2) which is configured for flow of a cooling liquid to cool the coil end (31b, 31c), the coil end cooling channel (Q1, Q2) being located radially outward (R2) from the first cylindrical wall (W1) and the second cylindrical wall (W2); wherein
the first cylindrical wall (W1) includes a metal ring (7) including an inner peripheral surface (7b) fitted to an outer peripheral surface (21h) of the second cylindrical wall (W2).

2. The electric motor (1) according to Claim 1, further comprising a plastic portion (5) integral with the stator core (30) and holding the metal ring (7).

3. The electric motor (1) according to Claim 2, wherein the plastic portion (5) includes a first portion (53) which covers the axial end surface (30a, 30b) of the stator core (30), and a second portion (52) which covers at least a portion of an outer peripheral surface (7a) of the metal ring (7) and defines a portion of the first cylindrical wall (W1).

4. The electric motor (1) according to Claim 3, wherein the plastic portion (5) includes a third portion (51) which extends in the axial direction (X) so as to block the slot opening (35b).

5. The electric motor (1) according to Claim 4, wherein the metal ring (7) includes a pair of metal rings (7) and the second portion (52) includes a pair of second portions(52), and the pair of metal rings (7) and the pair of second portions (52) are located on both sides of the stator core (30) in the axial direction (X), and
the third portion (51) couples the pair of second portions (52) with each other.

6. The electric motor (1) according to any one of Claims 2 to 5, wherein the metal ring (7) includes a first end (7c) in the axial direction (X) which opposes the axial end surface (30a, 30b) of the stator core (30) in the axial direction (X); and
the first end (7c) of the metal ring (7) is separated from the axial end surface (30a, 30b) of the stator core (30).

7. The electric motor (1) according to Claim 6, wherein the plastic portion (5) includes interposing portions (52e) interposed between the axial end surface (30a, 30b) of the stator core (30) and the first end (7c) of the metal ring (7), the interposing portions (52e) defining a portion of the first cylindrical wall (W1), and in which the contact portion (52c) is provided.

8. The electric motor (1) according to any one of Claims 1 to 7, wherein the coil (31) includes a plurality of segment coils (36); and
in terms of a protrusion height in the axial direction (X) from the axial end surface (30a, 30b) of the stator core (30), a maximum protrusion height (H1) of the coil end (31) is higher than a maximum protrusion height (H4) of the metal ring (7).

9. The electric motor (1) according to Claim 8, wherein in the coil end (31), the segment coil (36) includes an inclined portion (36e, 36f, 36g) which is inclined with respect to the axial direction (X) as viewed from radially inward (R1); and
in terms of the protrusion height in the axial direction (X) from the axial end surface (30a, 30b) of the stator core (30), a maximum protrusion height (H1, H2, H3) of the inclined portion (36e, 36f, 36g) is higher than the maximum protrusion height (H4) of the metal ring (7).

10. The electric motor (1) according to Claim 8 or 9, wherein in the coil end (31), the segment coil (36) includes a joint end (36j, 36k) connected to another segment coil (36); and
the joint end (36j, 36k) is located higher than the maximum protrusion height (H4) of the metal ring (7) in terms of the protrusion height in the axial direction (X) from the axial end surface (30a, 30b) of the stator core (30).

11. The electric motor (1) according to any one of Claims 1 to 10, wherein on the outer peripheral surface (21h) of the second cylindrical wall (W2), a housing groove (21j, 22j) houses a seal (13, 14) to seal between the outer peripheral surface (21h, 22h) of the second cylindrical wall (W2) and the inner peripheral surface (7b) of the metal ring (7).

12. The electric motor (1) according to any one of Claims 1 to 11, wherein the coil end cooling channel (Q1, Q2) is filled with the cooling liquid.
